# EUROPEAN PATENT SPECIFICATION

(11) **EP 2 048 566 B1**
(45) Date of publication and mention of the grant of the patent: **29.09.2010**
(21) Application number: 08253266.4
(22) Date of filing: 07.10.2008
(51) Int. Cl.: G05D 23/19, H05B 6/06, A47J 36/32

(54) **Automatic menu switching for a cooking apparatus**
Automatisches Menü-Umschalten für ein Kochgerät
Commutation automatique de menu pour appareil de cuisson

(30) Priority: 09.10.2007 US 978597 P
(43) Date of publication of application: 15.04.2009
(73) Proprietor: Technology Licensing Corporation, Fort Lauderdale FL 33316 (US)
(72) Inventor: Macdonald, Joshua T., La Mesa California 91942 (US); Flynn, William E., Naugatuck Connecticut 06770 (US)
(74) Representative: Pedder, James Cuthbert

(56) References cited:
- EP-A- 1 498 062
- WO-A-2004/099673
- JP-A- 9 060 886
- US-A- 4 742 455

## Description

This invention is directed to a cooking computer for controlling a cooking process, and in particular, a cooking computer, which is capable of automatically changing cooking parameters associated with control keys at a cooking appliance.

Cooking Computers, such as described in US Patent 4,742,455 to Schreyer, are used to control equipment used for preparing food and the cooking process followed in commercial foodservice establishments. In these establishments, employee turnover is high, and many cooks lack the skill of an expert chef. Therefore, the use of control equipment, which has pre-stored the precise cooking control sequence allows a largely unskilled workforce to prepare foods with minimal training. When an employee desires to cook a specific food item, they need only to select the appropriate product key, which causes the apparatus to automatically cook the food in accordance with proper parameters, thus eliminating any decision making by the employee. It is understood that these cooking computers are often embedded in the appliance so that the product keys are the input keys for operating the appliance. Other known systems are shown in EP 1 498 062, JP 09 060886 and WO 2004/099673.

The cooking process for breakfast, lunch, and dinner menu food items is each controlled by a variety of specific parameters (collectively a recipe), which are different for each food item. The specific cooking parameters for each food item may require different cook times, freshness times, temperatures, etc. based on amounts of each product produced or the type of products.

To avoid complicated keypads or touch-screens with a large number of possible selections, these cooking computers typically are limited to only a small number of selection keys, known as product keys. Each key is associated with a single predetermined product recipe and its associated cooking parameters (time, temperature, humidity, steam, etc.). However since the number of product keys available is limited, restaurant managers with such computer controlled equipment currently need to manually configure their equipment several times each day as the menus in their facilities change, This configuration becomes necessary in order to make certain that the equipment is set for the products that are going to be made at that time of the day.

In prior art cooking computers, it required that a manager (or some employee in the restaurant) manually determine which set of recipes would be available at the appliance by performing a selection process on the cooking computer. The process would have to be repeated each time the food items being prepared changed. For instance, when breakfast ended and the menu shifted to lunch, human intervention was required to change the cooking computer for an oven or fryer from the breakfast recipes to the lunch recipes (muffins to breads or French toast sticks to chicken). Likewise, when the lunch meal period ended and the menu shifted to dinner, a manual selection process is required to convert the product keys to trigger recipes for the dinner items. So, several times each day each cooking controller would require manual attention to ensure that the product keys were programmed with the proper recipes. To further complicate this matter, each cooking appliance would have to be visited multiple times daily.

Accordingly a system which overcomes the shortcomings of the prior art is desired.

According to a first aspect of the invention, there is provided a system for controlling the process of cooking a variety of food items at a single cooking apparatus comprising a cooking computer, the cooking computer controlling a cooking operation of the cooking apparatus; a database operatively coupled to the cooking computer and storing one or more recipes, each recipe including parameters for controlling the cooking of a respective food item food item; in which a product key is associated with said cooking computer activating said cooking computer to perform the cooking operation, an association of said one or more recipes to a respective one of each said product key being stored in said database; and at least one time slot associated with at least one of said one or more recipes corresponding to a time when said parameters of an associated recipe are associated with a product key.

According to a second aspect of the invention, there is provided a method for controlling a cooking apparatus utilizing a cooking computer comprising the steps of storing one or more recipes, the recipes including parameters for controlling the cooking apparatus to cook food; in which the method also comprises storing active time slots corresponding to a time period during which said recipes are to be utilized by the cooking apparatus under the control of said cooking computer; storing an association among a product key of said cooking computer associated with a recipe during a time slot; and monitoring a clock and comparing the current time to the stored time slot, and associating the key to the recipe when the time signal indicates the current time is within the stored time slot.

The result is the appropriate set of food item recipes is accessible to the cook at the appropriate time of day or day of the week. The manager no longer has to manually intervene and switch the appliance control to a set of recipes, which corresponds to the current food items being prepared and served, Instead the process of selecting which food item cooking sequences are accessible to the cook is accomplished automatically using the real-time clock in the cooking computer or by sending the appropriate command to the cooking computer through a data communications interface based on a selection process software which is operating on remote server, The remote server may be located locally in the restaurant or at a distance at corporate headquarters through which the restaurant has been connected using the Internet, phone lines or other communication means. Since the process take place automatically and seamlessly, it results in less time wasted and less chance for human error, which can impact food quality.

The invention will hereinafter be described with reference to the accompanying drawings comprising:
FIG. 1 is a cooking computer with product keys for selecting a food item to be cooked;
FIG. 2 shows a cooking computer constructed in accordance with the invention connected to a data communications network and a remote back office computer; and
FIG. 3 is a flow chart of setting up a cooking computer in accordance with the invention.

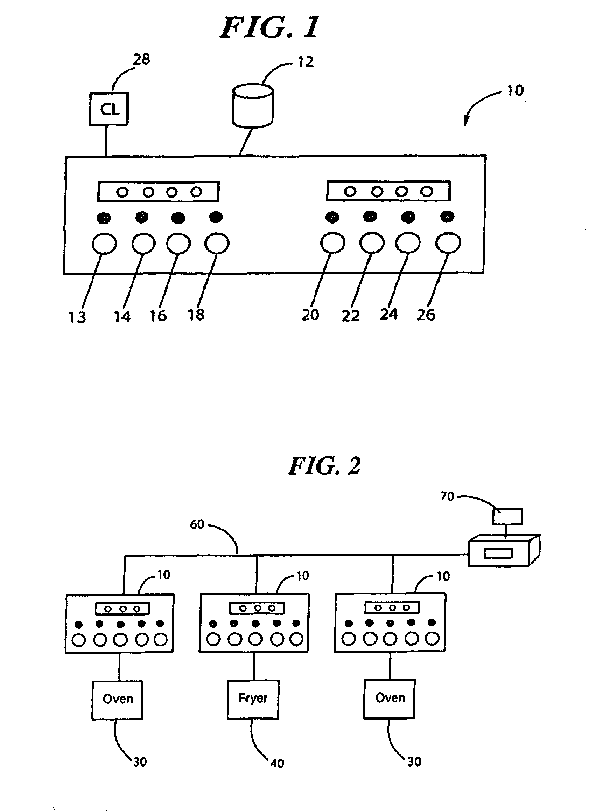

A system for controlling the operation of cooking food, generally indicated as 100, includes a cooking computer generally indicated as 10, as shown in Figs. 1 and 2, is connected to, or incorporated in, a cooking appliance such as oven 30 or fryer 40 by way of non-limiting example. Cooking computer 10 controls the timing of the cooking process (when cooking starts or is enabled), and also one or more control parameters in the cooking apparatus such as frying oil temperature, oven air temperature, humidity in the cooking chamber, or time duration for each stage of cooking at different temperatures, even venting, air flow rate and the like. The particular set of parameter values making up an individual recipe for a given food item are stored as a recipe in a database 12 associated with, and in communication with, cooking computer 10. Each recipe is assigned to a respective product key 13-26 of cooking computer 10.

Upon the selection of the product key 13, the associated recipe for the cooking sequence of a particular food item mapped to product key 13 is recalled. The cooking appliance 30 or 40 is automatically controlled in accordance with the associated recipe parameters during the cooking process.

However, looking again at Figure 1, cooking computer 10 only has a fixed number of product keys 13-26. Cooking computer 10 is capable of storing a much greater number of recipes than there are available product keys. One hundred or more recipes of different food items, by way of example, may be stored in database 12. As a result, at any given time, the recipes available to the employee are limited to a subset of the total number of recipes that have been pre-stored in cooking computer 10.

In one preferred embodiment, system 100 is equipped with a real-time clock 28 outputting a real time signal to cooking computer 100. The time periods (or slots) for each menu period (i.e., breakfast, lunch, dinner) are programmed into cooking computer 10. Each recipe is stored in database 12 and assigned to a respective one of predetermined product keys (13-26) and also to time slots during which the recipe is to be made available. In one embodiment, the association between recipe, key and active time period during which the stored recipe should be associated with a product key 13-26 is stored in database 12.

Cooking computer 10 monitors clock 28 and continuously compares the time signal of clock 28 to the stored time slot in database 12. When cooking computer 10 detects that the current time has reached/exceeded a time slot of interest for the next time slot, cooking computer 10 automatically reconfigures itself by retrieving recipe assignments corresponding to the current time period and associating keys 1326 with the appropriate stored recipe (for example, a transition from a breakfast menu to a lunch menu). This eliminates the need for a manager or employee to manually configure the cooking computer when the time period transitions from one day part to the next day part. It also eliminates the need for the manager (or employee) to perform this operation on every cooking computer in the restaurant.

In yet another embodiment, system 100 includes a data communications interface 60. Interface 60 allows cooking computer 10 to receive messages and commands from a remote computer 70, such as a manager's workstation, a back office server or a master server at restaurant headquarters. Interface 60 may be a local area network, wide area network, Internet, or any other interface such as cable, optical, radio frequency, light or the like which enables communication between remote computer 70 and cooking computers 10. The functionality of the above process may be distributed between cooking computers 10 and remote computers 70.

The time periods (or slots) for each menu period may be programmed into software or stored at remote computer 70, which operates on any of the cooking computers 10 through its data communications interface 60. Each recipe may be stored at cooking computer 10 and assigned to one of a product key 13-28 and a time slot as described previously. However, the logic and decision to switch the cooking computer from one time slot to the next time slot is undertaken by the remote computer 70. Remote computer 70 sends a command to cooking computer 10 over interface 60. In this manner, one or more of the cooking computers 10 in a given location may be directed to reassign their product keys 13-26 to stored recipe corresponding to the current time slot. In alternative embodiments the real time clock, any of the time slot, recipe and key assignments may be stored at remote computer 70.

Software operating on remote computer 70 may utilize a real-time clock to determine when to send the command that causes the product keys 13-26 to change recipe values. Likewise, the software may operate under human command in which case the manager or other employee initiates the sending of the command over interface 60 to cooking computers 10. In either case, some or all of cooking computers 10 at one or more locations can be signaled in one step to change recipes associated with product key assignments for the new time slot.

Data communications interface 60 may be wired such as serial port or Ethernet port. It may also be a wireless communications interface such as Bluetoothe or Wireless Ethernet.

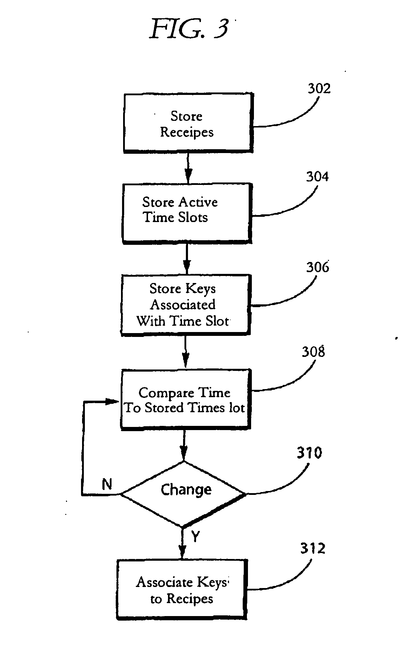

Reference is now made to Fig. 3 in which a flow chart demonstrating the operation of cooking computer 10 in accordance with one embodiment of the invention is provided. The process is initialized by first storing recipes within system 100 either at cooking computer 10 and its associated database 12 or at a remote computer 70 and its associated databases. The active time slots, i.e., the time slots during which an associated recipe is active for controlling a cooking process is stored in database 12 or at a remote computer 70 and is mapped to or associated with the appropriate recipe in a step 304. In a step 306, the respective control keys 13-26 are associated with each recipe and time slots.

In step 308, cooking computer 10 or remote computer 70 monitors a real time clock 28 and compares the current time to the stored time slots. It determines whether or not there has been a change in the current time slot, i.e., the real time clock output no longer corresponds to a time within any one of the time slots associated with any one of the recipes currently associated with a control button of cooking computer 10. If there has been a change, then cooking computer 10 or remote computer 70 determines which recipes correspond to the current active time slots in which the current real time falls and associates those recipes to the keys 13-26 of the appropriate control computer 10.

Each computer with the auto menu-switching (AMS) feature will have the ability to enable/disable this feature manually with the proper access permissions. Also, AMS in the event that a new menu time slot has been reached while active products exist (i.e. a cook timer is counting down), the computer will only load the new menu settings that do not affect the active products. Once the active products are no longer active, the new menu settings for those products will be loaded in. This prevents a product's settings from being changed in the middle of producing that product and affecting its quality.

In addition, the AMS will allow a manager or employee with the proper access permissions to manually override the auto switching capabilities. This manual override will consist of adding a time delay before the automatic switch occurs as well as an immediate menu switching ability. Adding a time delay to the ams allows the restaurant to continue to offer a product for a particular menu for an extended amount of time if need be. The immediate switching feature allows the restaurant to switch to a particular menu earlier than typically required. This can help in cases where food products need to be prepared in advance to meet early demand. In either case, the same rules apply where inactive products will be reconfigured, but active products will not be until they have become inactive, again to ensure product quality.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions of the relevant exemplary embodiments. Thus, the description of the invention is merely exemplary in nature and, thus, variations that do not depart from the gist of the invention are intended to be within the scope of the exemplary embodiments of the present invention. Such variations are not to be regarded as a departure from the spirit and scope of the present invention.

## Claims

1. A system for controlling the process of cooking a variety of food items at a single cooking apparatus (30) comprising:
a cooking computer (10), the cooking computer (10) controlling a cooking operation of the cooking apparatus (30);
a database (12) operatively coupled to the cooking computer (10) and storing one or more recipes, each recipe including parameters for controlling the cooking of a respective food item and
a product key (13 - 26), associated with said cooking computer (10) activating said cooking computer (10) to perform the cooking operation, an association of said one or more recipes to a respective one of each said product key (13 -26) being stored in said database (12); **characterized by**
at least one time slot associated with at least one of said one or more recipes corresponding to a time when said parameters of an associated recipe are associated with a product key (13 - 26).

2. The cooking computer of claim 1, further comprising a real time clock (28), the database (12) storing one or more time slots, the cooking computer (10) comparing a time signal output by the real time clock (28) with said time slot and associating the recipe with the product key (13 - 26) as a function of a match between the time signal and the time slot.

3. The cooking computer of claim 1, further comprising a remote computer (70) in communication with said cooking computer (10), the remote computer (70) determining when the time signal corresponds to a stored time slot.

4. A method for controlling a cooking apparatus (30) utilizing a cooking computer (10) comprising the steps of:
storing one or more recipes, the recipes including parameters for controlling the cooking apparatus (30) to cook food; **characterized by**
storing active time slots corresponding to a time period during which said recipes are to be utilized by the cooking apparatus (30) under the control of said cooking computer (10);
storing an association among a product key (13 -26) of said cooking computer (10) associated with a recipe during a time slot; and
monitoring a clock (28) and comparing the current time to the stored time slot, and associating the key (13 - 26) to the recipe when the time signal indicates the current time is within the stored time slot,

## Patentansprüche

1. System zum Steuern des Kochablaufs von einer Vielzahl von Nahrungsmitteln bei einer einzelnen Kochvorrichtung (30):
- mit einem Kochcomputer (10) wobei der Kochcomputer (10) einen Kochvorgang der Kochvorrichtung (30) steuert;
- mit einer Datenbank (12), die betriebsbereit mit dem Kochcomputer (10) verbunden ist und ein oder mehrere Rezepte speichert, wobei jedes Rezept Parameter zum Steuern des Kochens von entsprechenden Lebensmitteln aufweist, und
- mit einem Erzeugnisschlüssel (13 bis 26), der mit dem Kochcomputer (10) verbunden ist, wobei er den Kochcomputer (10) aktiviert, um den Kochvorgang einer Zusammenstellung von einem oder mehreren Rezepten zu einem jeweiligen Rezept von jedem Erzeugnisschlüssel (13 bis 26), die in der Datenbank (12) gespeichert sind, auszuführen, **gekennzeichnet durch**
- mindestens ein Zeitfenster, das mit mindestens einem von einem oder mehreren Rezepten gemäß einer Zeit assoziiert ist, wenn die Parameter von einem assoziierten Rezept mit einem Erzeugnisschlüssel (13 bis 26) in Verbindung sind.

2. Kochcomputer gemäß Anspruch 1, der ferner eine Echtzeituhr (28) aufweist, und die Datenbank (12) ein oder mehrere Zeitfenster speichert, wobei der Kochcomputer (10) ein von der Echtzeituhr (28) ausgegebenes Zeitsignal mit dem Zeitfenster vergleicht und das Rezept mit dem Produktschlüssel (13 bis 26) als eine Funktion einer Übereinstimmung zwischen dem Zeitsignal und dem Zeitfenster assoziiert.

3. Kochcomputer gemäß Anspruch 1, der ferner einen Remote-Computer (70), der mit dem Kochcomputer (10) kommuniziert, aufweist, wobei der Remote-Computer (70) festlegt, wann das Zeitsignal einem gespeicherten Zeitfenster entspricht.

4. Zahn zum Steuern einer Kochvorrichtung (30), die einen Kochcomputer (10) verwendet, wobei das Verfahren folgende Schritte aufweist:
- Speichern von einem oder mehreren Rezepten, wobei die Rezepte Parameter zum Steuern der Kochvorrichtung (30) umfassen, um Lebensmittel zu kochen; **gekennzeichnet durch**
- Speichern aktiver Zeitfenster gemäß einer Zeitdauer, während der die Rezepte von der Kochvorrichtung (30) **durch** Steuern des Kochcomputers (10) verwendet werden sollen;
- Speichern einer Verbindung zwischen einem Produktschlüssel (13 bis 26) des Kochcomputers (10), der mit einem Rezept während eines Zeitfensters assoziiert ist; und
- Überwachen einer Uhr (28) und Vergleichen der gegenwärtigen Zeit mit dem gespeicherten Zeitfenster und Assoziieren des Schlüssels (13 bis 26) mit dem Rezept, wenn das Zeitsignal zeigt, dass sich die gegenwärtige Zeit innerhalb des gespeicherten Zeitfensters befindet.

## Revendications

1. Système pour commander le processus de cuisson d'une variété d'aliments dans un unique appareil de cuisson (30) comprenant :
un ordinateur de cuisson (10), l'ordinateur de cuisson (10) commandant une opération de cuisson de l'appareil de cuisson (30) ;
une base de données (12) couplée fonctionnellement à l'ordinateur de cuisson (10) et stockant une ou plusieurs recettes, chaque recette comprenant des paramètres pour commander la cuisson d'un aliment respectif et
une touche de produit (13-26), associée audit ordinateur de cuisson (10), activant ledit ordinateur de cuisson (10) pour exécuter l'opération de cuisson, une association desdites une ou
plusieurs recettes à l'une respective de chaque dite touche de produit (13-26) étant mémorisée dans ladite base de données (12) ; **caractérisé par**
au moins un intervalle de temps associé à au moins une desdites une ou plusieurs recettes correspondant à un temps où lesdits paramètres d'une recette associée sont associés à une touche de produit (13-26).

2. Ordinateur de cuisson selon la revendication 1, comprenant en outre une horloge temps réel (28), la base de données (12) stockant un ou plusieurs intervalles de temps, l'ordinateur de cuisson (10) comparant un signal de temps délivré par l'horloge temps réel (28) avec ledit intervalle de temps et associant la recette à la touche de produit (13-26) comme une fonction de correspondance entre le signal de temps et l'intervalle de temps.

3. Ordinateur de cuisson selon la revendication 1, comprenant en outre un ordinateur à distance (70) en communication avec ledit ordinateur de cuisson (10), l'ordinateur à distance (70) déterminant quand le signal de temps correspond à un intervalle de temps mémorisé.

4. Système pour commander un appareil de cuisson (30) utilisant un ordinateur de cuisson (10), comprenant les étapes suivantes :
■ la mémorisation d'une ou plusieurs recettes, les recettes comprenant des paramètres pour commander l'appareil de cuisson (30) pour cuire des aliments, **caractérisé par**
■ la mémorisation d'intervalles de temps actifs correspondant à une période de temps durant laquelle lesdites recettes doivent être utilisées par l'appareil de cuisson (30) sous le contrôle dudit ordinateur de cuisson (10) ;
■ la mémorisation d'une association parmi une touche de produit (13-26) dudit ordinateur de cuisson (10) associée à une recette durant un intervalle de temps ; et
■ le monitorage d'une horloge (28) et la comparaison du temps actuel avec l'intervalle de temps mémorisé, et l'association de la touche (13-26) avec la recette quand le signal de temps indique que le temps actuel est dans l'intervalle de temps mémorisé.
